# EUROPÄISCHE PATENTANMELDUNG

(11) **EP 2 924 398 A2**
(43) Veröffentlichungstag der Anmeldung: **30.09.2015**
(21) Anmeldenummer: 15160357.8
(22) Anmeldetag: 23.03.2015
(51) Int. Cl.: G01D 11/30, B60Q 1/00, B60Q 1/26, B60Q 1/34, B60Q 9/00, G01S 7/521, G01S 13/93, G01S 15/93

(54) **SENSORANORDNUNG**

(30) Priorität: 25.03.2014 DE 102014205505
(71) Anmelder: MEKRA LANG GmbH & Co. KG, 91465 Ergersheim (DE)
(72) Erfinder: Lang, Dr. Werner, 91465 Ergersheim (DE); Finkenberger, Elmar, 91587 Adelshofen (DE); Deffner, Simon, 91604 Flachslanden (DE); Zink, Matthias, 91620 Ohrenbach (DE)
(74) Vertreter: Winter, Brandl, Fürniss, Hübner, Röss, Kaiser, Polte - Partnerschaft mbB

(57) **Zusammenfassung**

Es wird Sensoranordnung, insbesondere für außen an einem Fahrzeug anzubringende Sensoren (2) zur Überwachung des Fahrzeugumfeldes bereitgestellt. Kleine Fertigungstoleranzen (t) zwischen dem Sensorkopf (6) und dem Sensorhauptkörper (4) können zu ungleichmäßigen Spaltmaßen (s1, s2) führen. Dadurch, dass die Sensorkopfaufnahme (10) so ausgebildet ist, dass im montierten Zustand des Sensors (2) im Sensorhalter (8) die Sensorhalteachse (24) und die Sensorachse (20) fluchten ergibt sich zwischen dem Rand der Sensorkopföffnung (12) und dem Sensorkopf (6) ein Fügespalt mit konstantem Spaltmaß (s3). Die optisch als unschön empfundenen Spaltmaßvariationen (s1, s2) werden dadurch verhindert bzw. es wird die optische Wertigkeit der Baugruppe erhöht. Das gleichmäßige Spaltmaß (s3) verringert auch Windgeräusche und Verschmutzungen im Innenbereich. Trotz des konstanten Spaltmaßes (s3) wird die Montage des Sensors (2) im Sensorhalter (8) nicht schwieriger. Die Außenseite des Sensorhalters (8) ist vorzugsweise als Sichtteil ausgestaltet. Alternativ ist jedoch auch eine zusätzliche durchsichtige Abdeckung möglich.

## Beschreibung

Die Erfindung betrifft eine Sensoranordnung, insbesondere für außen an einem Fahrzeug anzubringende Sensoren zur Überwachung des Fahrzeugumfeldes gemäß dem Oberbegriff des Anspruchs 1.

Bei Kraftfahrzeugen werden immer Sensoren unterschiedlichster Art für die Überwachung des Fahrzeugsumfeldes eingesetzt. Es kommen Ultraschallsensoren für Parkassistenzsysteme, Radarsensoren für Abstandsüberwachungssysteme, Kameras für indirekte Sichtsysteme und Wärmebildkameras zur Erfassung von Personen im Nahbereich um Fahrzeuge und dergleichen zum Einsatz.

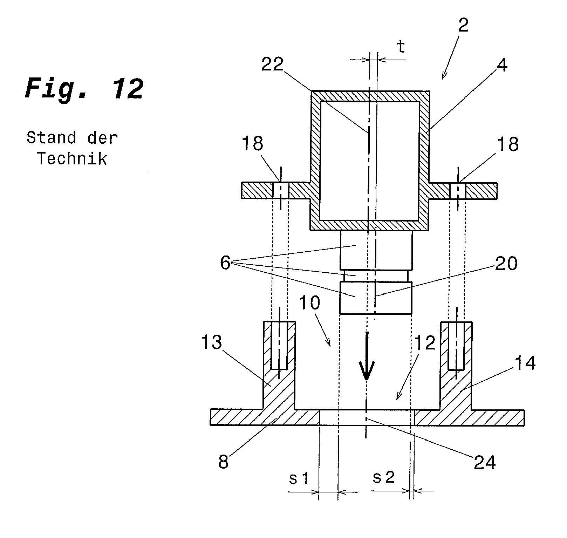

Wie in Fig. 12 schematisch dargestellt ist, umfassen solche Sensoren 2 einen Sensorhauptkörper 4 aus dem ein Sensorkopf 6 herausragt. Der Sensor 2 wird in einem Sensorträger 8 gehalten. Der Sensorträger 8 umfasst eine Sensorkopfaufnahme 10 mit einer Sensorkopföffnung 12 und zwei Schraubenaufnahmen 13 und 14, die sich links und rechts der Sensorkopföffnung 12 in Richtung des Sensorhauptkörpers 4 erstrecken. Der Sensorhauptkörper 4 umfasst zwei sich links und rechts vom Sensorhauptkörper 4 wegerstreckende Befestigungslaschen 15 und 16 mit Schraublöchern 18. Der Sensor 2 wird in den Sensorträger 8 eingesetzt und die beiden Befestigungslaschen 15 und 16 kommen auf dem oberen Ende der beiden Schraubenaufnahmen 13 und 14 zu liegen und Sensor 2 und Sensorträger 8 werden mittels nicht dargestellten Schrauben miteinander verschraubt. Die Höhe der beiden Schraubenaufnahmen 13 und 14 ist so gewählt, dass der Sensorkopf 6 mit der Außenseite des Sensorträgers 8 fluchtet.

Der Sensor 2 umfasst eine Sensorachse 20 nach der er auszurichten ist. Der Sensorhauptkörper 4 umfasst eine Hauptkörpermittelachse 22, die aufgrund von Fertigungstoleranzen t von der Sensorachse 20 abweicht. Die Sensorkopfaufnahme 10 bzw. die Sensorkopföffnung 12 weisen eine Sensorhalteachse 24 auf. Da der Sensor 2 mittels der symmetrisch zum dem Sensorhauptkörper 4 angeordneten Befestigungslaschen 15 und 16 an dem Sensorträger montiert wird, muss die Fertigungstoleranz t zwischen Sensorachse 20 und Hauptkörpermittelachse bei der Dimensionierung der Sensorkopföffnung 12 berücksichtigt werden. Es ergeben sich daher im zusammengebauten Zustand von Sensor 2 und Sensorträger 8 zwischen dem Rand der Sensorkopföffnung 12 und dem Sensorkopf 6 unterschiedliche Spaltmaße zwischen s1 und s2. Diese unterschiedlichen Spaltmaße zwischen s1 und s2 führen zu einem optisch unbefriedigenden Ergebnis, da das menschliche Auge auf solche Spaltmaßvariationen empfindlich reagiert.

Es ist daher Aufgabe der vorliegenden Erfindung eine Sensoranordnung anzugeben, die derartige Spaltmaßvariationen vermeidet.

Die Lösung dieser Aufgabe erfolgt durch die Merkmale des Anspruchs 1.

Dadurch, dass die Sensorkopfaufnahme so ausgebildet ist, dass im montierten Zustand des Sensors im Sensorhalter die Sensorhalteachse und die Sensorachse fluchten ergibt sich zwischen dem Rand der Sensorkopföffnung und dem Sensorkopf ein Fügespalt mit konstantem Spaltmaß. Die optisch als unschön empfundenen Spaltmaßvariationen werden dadurch verhindert bzw. es wird die optische Wertigkeit der Baugruppe erhöht. Das gleichmäßige Spaltmaß verringert auch Windgeräusche und Verschmutzungen im Innenbereich. Trotz des konstanten Spaltmaßes wird die Montage des Sensors im Sensorhalter nicht schwieriger. Die Außenseite des Sensorhalters ist vorzugsweise als Sichtteil ausgestaltet. Alternativ ist jedoch auch eine zusätzliche durchsichtige Abdeckung möglich. Die Befestigungsmittel können ein oder mehrere Schrauben, Klemmen und dergleichen umfassen.

Vorzugsweise ist der Sensorkopf in der Sensorkopföffnung fixiert - Anspruch 2. Dies erfolgt entweder durch einen Klemmsitz des Sensorkopfes in der Sensorkopföffnung oder durch umlaufenden Kragen an dem Sensorkopf, der auf dem Sensorhalter aufliegt - Anspruch 3.

Gemäß einer vorteilhaften Ausgestaltung ist die Sensorkopföffnung von einer Blende mit Blendenöffnung umgeben. Der Sensorkopf ragt durch die Sensorkopföffnung hindurch und in die Blendenöffnung hinein. Dadurch kann das von außen sichtbare Spaltmaß zwischen Sensorkopf und Rand der Blendenöffnung nach externen vorgaben festgelegt werden - Anspruch 4.

Durch das Vorsehen von Zentriermitteln an Sensorkopf und Sensoraufnahme wird sicher gewährleistet, dass Sensorachse und Sensorhalteachse miteinander fluchten - Anspruch 5.

Gemäß einer vorteilhaften Ausgestaltung nach Anspruch 6 werden die Fertigungstoleranzen zwischen der Hauptkörpermittelachse und der Sensorachse durch entsprechende Dimensionierung der Befestigungsmittel von außen unsichtbar ausgeglichen.

Gemäß der vorteilhaften Ausgestaltung der Erfindung nach Anspruch 7 sind Sensor und Sensorhalter an oder in einem Haltearm befestigt.

Durch die Ausgestaltungen nach den Ansprüchen 8 bis 12 haben die verschiedenen Möglichkeiten der Integration von Sensor und Sensorhalter in einen Haltearm zum Gegenstand.

Durch die vorteilhafte Ausgestaltung der Erfindung nach Anspruch 10 und 11 kann das Spaltmaß an externe Anforderungen angepasst werden. Zusätzlich wird die Länge des Spaltes mit vordefiniertem Spaltmaß vergrößert und dadurch optisch auffälliger gemacht.

Durch die die vorteilhafte Ausgestaltung nach Anspruch 13 kann der Sensorhalter, der Haltearm und/oder die Haltearmabdeckung als Kühlkörper für den Sensor 2 genutzt werden.

Durch die die vorteilhafte Ausgestaltung nach Anspruch 14 wird ein Beschlagen der von außen zugänglichen Sensorfläche verhindert, was insbesondere bei Kameras und deren Objektiven wichtig ist.

Die vorteilhafte Ausgestaltung nach Anspruch 15 ermöglicht indirekte Sichtsysteme mit Spiegelersatzkameras um gesetzlich vorgeschrieben Sichtfelder zu erfassen. Die Sensorachse ist hierbei die optische Achse des Kameraobjektivs.

Durch die vorteilhafte Ausgestaltung nach Anspruch 8 werden ungewünschte Reflexionen in den Sensor vermieden bzw. reduziert.

Die Sensoranordnung lässt sich vorzugsweise in bereits außen am Fahrzeug montierten Bauteilen, wie Blinkerleuchten, Außenspiegel und dergleichen integrieren - Anspruch 18

Die übrigen Unteransprüche beziehen sich auf weitere vorteilhafte Ausgestaltung der Erfindung.

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine Explosionsdarstellung einer ersten Ausführungsform der Erfindung;
Fig. 2 eine Explosionsdarstellung einer zweiten Ausführungsform der Erfindung;
Fig. 3 eine schematische Darstellung einer dritten Ausführungsform der Erfindung;
Fig. 4 eine schematische Darstellung einer vierten Ausführungsform der Erfindung;
Fig. 5 eine Schnittdarstellung einer fünften Ausführungsform der Erfindung;
Fig. 6 eine Schnittdarstellung einer sechsten Ausführungsform der Erfindung;
Fig. 7 eine Schnittdarstellung einer siebten Ausführungsform der Erfindung;
Fig. 8 eine Schnittdarstellung einer achten Ausführungsform der Erfindung;
Fig. 9 eine Schnittdarstellung einer neunten Ausführungsform der Erfindung;
Fig. 10 eine Schnittdarstellung einer zehnten Ausführungsform der Erfindung;
Fig. 11 eine Schnittdarstellung einer elften Ausführungsform der Erfindung; und
Fig. 12 eine Fig. 1 entsprechende Darstellung einer Sensoranordnung nach dem Stand der Technik.

Bei den nachfolgend beschriebenen beispielhaften Ausführungsformen der Erfindung werden einander entsprechende Teile mit gleichen Bezugszeichen bezeichnet.

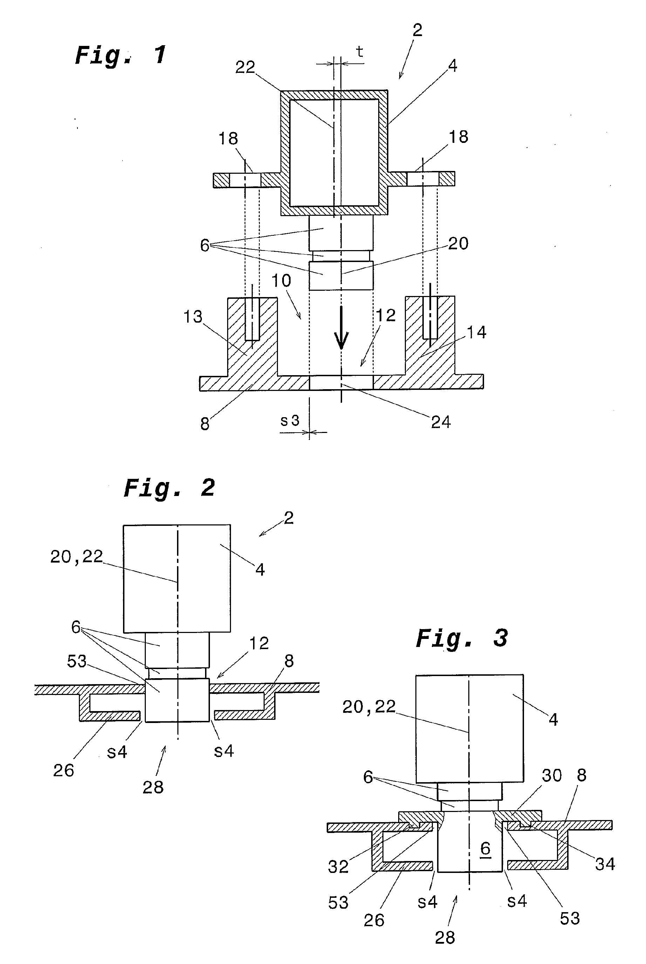

Fig. 1 zeigt eine erste Ausführung von der Erfindung in Explosions- bzw. Schnittdarstellung. Die Sensoranordnung umfasst einen Sensor 2 mit einem Sensorhauptkörper 4 aus dem ein Sensorkopf 6 herausragt. Der Sensor 2 wird in einem Sensorhalter 8 gehalten. Der Sensorhalter 8 und umfasst eine Sensorkopfaufnahme 10 mit einer Sensorkopföffnung 12 und zwei Schraubenaufnahmen 13 und14, die sich links und rechts der Sensorkopföffnung 12 in Richtung des Sensorhauptkörpers 4 erstrecken. Der Sensorhauptkörper 4 umfasst zwei sich links und rechts von dem Sensorhauptkörper 4 wegerstreckende Befestigungslaschen 15 und 16 mit Schraublöchern 18. Der Sensor 2 wird in den Sensorhalter 8 eingesetzt und die beiden Befestigungslaschen 15 und 16 kommen auf dem oberen Ende der beiden Schraubenaufnahmen 13 und 14 zu liegen. Der Sensor 2 und der Sensorhalter 8 werden mittels nicht dargestellten Schrauben miteinander verschraubt. Die Höhe der beiden Schraubenaufnahmen 13 und 14 ist so gewählt, dass der Sensorkopf 6 mit der Außenseite des Sensorhalters 8 fluchtet.

Der Sensor 2 umfasst eine Sensorachse 20 nach der er auszurichten ist. Der Sensorhauptkörper 4 umfasst eine Hauptkörpermittelachse 22, die auf Grund von Fertigungstoleranzen t von der Sensorachse 20 abweicht bzw. abweichen kann. Die Sensorkopfaufnahme 10 bzw. die Sensorkopföffnung 12 weisen eine Sensorhalterachse 24 auf. Im Gegensatz zu dem Stand der Technik gemäß Fig. 12 erfolgt die Ausrichtung bzw. die Montage des Sensors 2 derart, dass nicht die Hauptkörpermittelachse 22 mit der Sensorhalterachse 24 fluchtet, sondern die Sensorachse 20 fluchtet mit der Sensorhalteachse 24. Daher müssen im Vergleich zu dem Stand der Technik die Bohrlöcher 18 in den Haltelaschen 15 und 16 etwas größer ausgeführt werden, damit die Fertigungstoleranz t, d. h. die Abweichung zwischen der Hauptkörpermittelachse 22 und der Sensorachse 20 ausglichen werden kann. Durch geeignete Dimensionierung der Sensorkopföffnung 12 ergibt sich ein genau definiertes Spaltmaß s3 zwischen den Rand der Sensorkopföffnung 12 und den Sensorkopf 6. Das Spaltmaß s3 kann daher nach den Bedürfnissen des jeweiligen Einsatzortes angepasst werden.

Die Fertigungstoleranz t ist in den nachfolgend beschriebenen Ausführungsformen aus Gründen der einfacheren Darstellung nicht mehr zeichnerisch dargestellt.

Fig. 2 zeigt eine zweite Ausführungsform der Erfindung, die sich von der ersten Ausführungsform nach Fig. 1 dadurch unterscheidet, dass der Sensorkopf 6 über die Sensorkopföffnung 12 hinausragt und dass der Sensorkopf 6 in der Sensorkopföffnung 12 mittels Presssitz gehalten ist. Die Sensorkopföffnung 12 wird von einer Blende 26 umgeben, die eine Blendenöffnung 28 aufweist in die der Sensorkopf 6 hineinragt. Das freie Ende des Sensorkopfs 6 fluchtet mit der Außenseite der Blende 26. Der Abstand des Randes der Blendenöffnung 28 zu dem Sensorkopf 6 kann auf ein gewünschtes Spaltmaß s4 eingestellt werden.

Fig. 3 zeigt eine dritte Ausführungsform der Erfindung die sich von der Ausführungsform nach Fig. 2 lediglich dadurch unterscheidet, dass der Sensorkopf 6 einen umlaufenden Sensorkopfkragen 30 aufweist. Der umlaufende Sensorkopfkragen 30 weist einen ebenfalls umlaufenden Ringwulst 32 mit rechteckigem Querschnitt auf, der in eine korrespondierende Ringnut 34 auf der Innenseite des Sensorhalters 8 eingreift. Ringwulst 32 und Ringnut 34 stellen Zentriermittel dar mittels denen die gewünschte Ausrichtung der Sensorachse 20 mit der Sensorhalteachse 24 erfolgt.

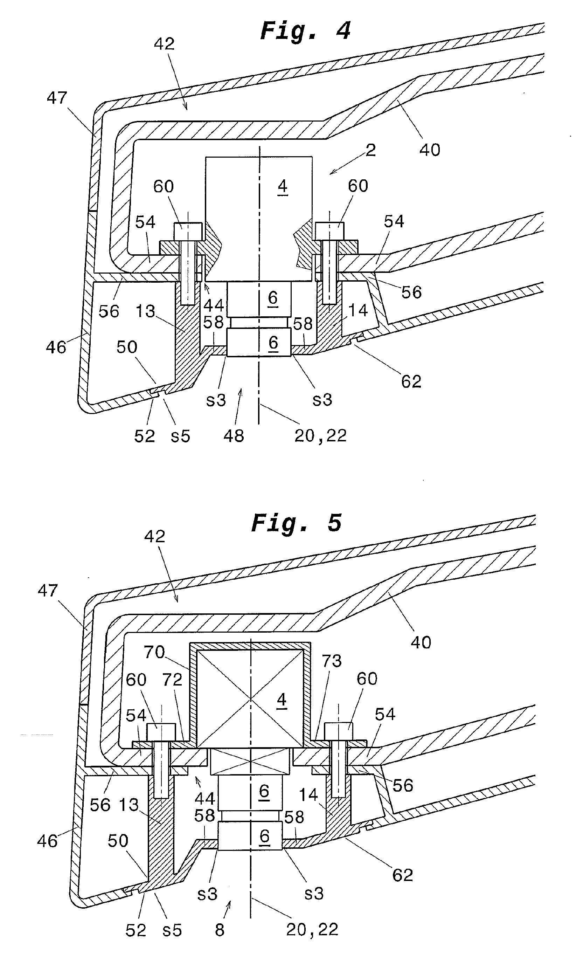

Fig. 4 zeigt eine vierte Ausführungsform der Erfindung bei der Sensor 2 und Sensorträger 8 an einem Haltearm 40 montiert sind. Damit kann der Sensor 2 beispielsweise an der Außenseite eines Kraftfahrzeugs montiert werden. Der Haltearm 40 ist wenigstens teilweise als Hohlprofil ausgebildet und weist an seinem vom Fahrzeug abgewandten Ende 42 eine quer zur Längsrichtung des Haltearms 40 verlaufende Sensoröffnung 44 auf. Der Haltearm 40 wird durch eine erste Haltearmabdeckung 46 und eine zweite Haltearmabdeckung 47 umhüllt. Die erste Haltearmabdeckung 46 weist eine Sensorhalteröffnung 48 auf in die der Sensorhalter 8 eingesetzt ist.

Der Sensorhalter 8 weist einen ringförmig umlaufenden, stufenförmigen Kragen 50 auf, der überlappend in eine korrespondierende ringförmig umlaufende Stufe 52 in der ersten Haltearmabdeckung 46 eingreift. Auf der Innenseite sind der stufenförmige Kragen 50 und die korrespondierende Stufe 52 auf Stoß gelegt und an der Außenseite sind sie mit einem vordefiniertem Spaltmaß s5 beabstandet. Wiederum kann das Spaltmaß s5 an externe Vorgaben angepasst werden.

Die Sensoröffnung 44 im Hohlbereich des Haltearms 40 wird durch einen ebenen Randabschnitt 54 begrenzt. In dem Randabschnitt 54 sind Schraublöcher 18 vorgesehen. Entlang der Außenseite der ebenen Randabschnitte 54 des Haltearms 40 erstreckt sich ein ringförmiger Befestigungskragen 56 der ersten Haltearmabdeckung 46. Der Befestigungskragen 56 weist ebenfalls Schraublöcher 18 auf. Innerhalb des ringförmigen Kragens 50 erstrecken sich die linke und rechte Schraubenaufnahme 13 und 14 nach innen in Richtung Haltearm 40. Zwischen den beiden Schraubenaufnahmen 13 und 14 erstreckt sich ein ebener Randabschnitt 58 als Begrenzung der Sensorkopföffnung 12. Der Randabschnitt 58 weist ebenfalls Schraublöcher 18 auf. Von dem Sensorhauptkörper 4 erstrecken sich seitlich eine linke und eine rechte Befestigungslasche 15 und 16 weg, die der linken und rechten Schraubenaufnahme 13 und 14 zugeordnet sind. Die beiden Befestigungslaschen 15 und 16 liegen auf der Innenseite auf dem ebenen Randabschnitt 54 auf.

Zwei Befestigungsschrauben 60 durchsetzten zunächst die Schraublöcher 18 in den Befestigungslaschen 15 und 16, dann die Schraublöcher 18 dem ebenen Randabschnitt 54 des Haltearms 40, die Schraublöcher 18 in dem Befestigungskragen 56 und greifen schließlich in die Schraubenaufnahmen 13 und 14 ein. Damit ist der Sensor 2, der Sensorhalter 8 und die erste Haltearmabdeckung 40 miteinander und am Haltearm 40 fixiert. Die einzelnen Bauteile sind so dimensioniert, dass der Sensorkopf 6 in etwa mit der Außenseite der Sensorkopföffnung 12 fluchtet.

Der Sensorkopf 6 sitzt in der Sensorkopföffnung 12, so dass sich lediglich ein umlaufende Fügespalt mit Spaltmaß s3 zwischen den Rand der Sensorkopföffnung 12 und den Sensorkopf 6 ergibt. Die Steckrand- oder Überlappverbindung zwischen dem ringförmigen Kragen 50 und der komplementären ringförmigen Stufe 52 ist so ausgebildet, dass sich ein von außen sichtbarer ringförmiger geschlossener Spalt 62 mit einem vordefinierten Spaltmaß s5 ergibt.

Die linke Seite des ringförmigen Kragens 50 ragt über das Ende des Sensorkopfes 6 hinaus während die rechte Seite des ringförmigen Kragens 50 gegenüber den Sensorkopf 6 etwas zurückgesetzt ist. Durch diese Ausgestaltung wird ein optisch gleichmäßiger Eindruck erreicht und außerdem wird die Gefahr der Verschmutzung durch seitlichen Eintrag vermindert.

Fig. 5 zeigt eine fünfte Ausführungsform der Erfindung, die sich von der Ausführungsform nach Fig. 4 dadurch unterscheidet, dass der Sensorhauptkörper 4 keine Befestigungslaschen aufweist. Die Sensoröffnung 44 in dem Halterarm 40 ist so dimensioniert, dass die dem Sensorkopf 6 zugewandte Unterkante des Sensorhauptkörpers 4 auf den ebenen Randabschnitt 54 aufsitzt. Das von dem Sensorkopf 6 abgewandte Ende des Sensorhauptkörpers 4 wird von einer oberen Haltekappe oder einem oberen Haltebügel 70 umhüllt, von der sich seitlich linke und rechte Befestigungslaschen 72 und 73 wegerstrecken.

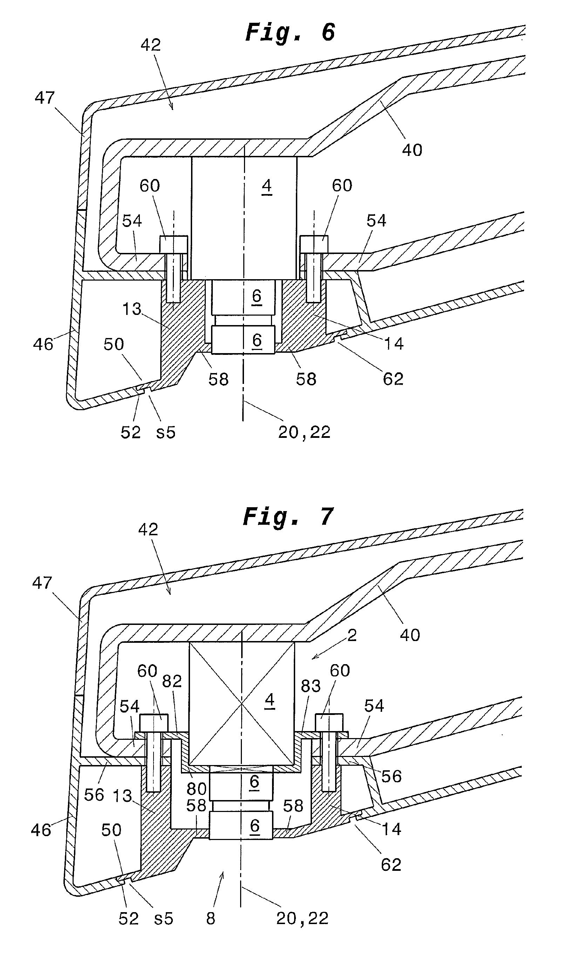

Fig. 6 zeigt eine sechste Ausführungsform der Erfindung, die sich von der Ausführungsform nach Fig. 5 dadurch unterscheidet, dass der Sensorhauptkörper 4 keine Befestigungslaschen aufweist. Die linke und rechte Schraubenaufnahme 13 und 14 ist nach innen verbreitet ausgeführt, so dass die dem Sensorkopf 6 zugewandte Unterkante des Sensorhauptkörpers 4 auf den oberen Enden der beiden Schraubeaufnahmen 13 und 14 aufsitzt. Das von den Sensorkopf 6 abgewandte andere Ende Sensorhauptkörpers 4 stößt an die Innenseite des Halterarms 40, so dass der Sensorhauptkörper 4 und damit der Sensor 2 zwischen der Innenseite des Haltearms 40 und der Oberseite der beiden Schraubenaufnahmen 13 und 14 eingeklemmt ist. Die Befestigungsschrauben 60 durchsetzen die Schraublöcher 18 in dem ebenen Randabschnitt 54, die Schraublöcher 18 in dem ringförmigen Befestigungskragen 56 und greifen in die Schraubenaufnahmen 15 und 16 ein.

Fig.7 zeigt eine siebte Ausführungsform der Erfindung, die sich von der Ausführungsform nach Fig. 6 dadurch unterscheidet, dass die dem Sensorkopf 6 zugewandte Unterkante des Sensorhauptkörpers 4 nicht auf verbreiterten Schraubenaufnahmen 14 und 16 abstützt, sondern das die dem Sensorkopf 6 zugewandte untere Seite des Sensorhauptkörpers 4 von einer unteren Haltekappe oder einem unteren Haltebügel 80 umfasst wird. Von der unteren Haltekappe 80 erstrecken sich seitlich linke und rechte Befestigungslaschen 82 und 83 weg. Der Sensorhauptkörper 4 und damit der Sensor 2 wir damit zwischen der unteren Haltekappe 80 und der Innenseite des Haltearms 40 eingeklemmt und an dem Haltearm 40 fixiert.

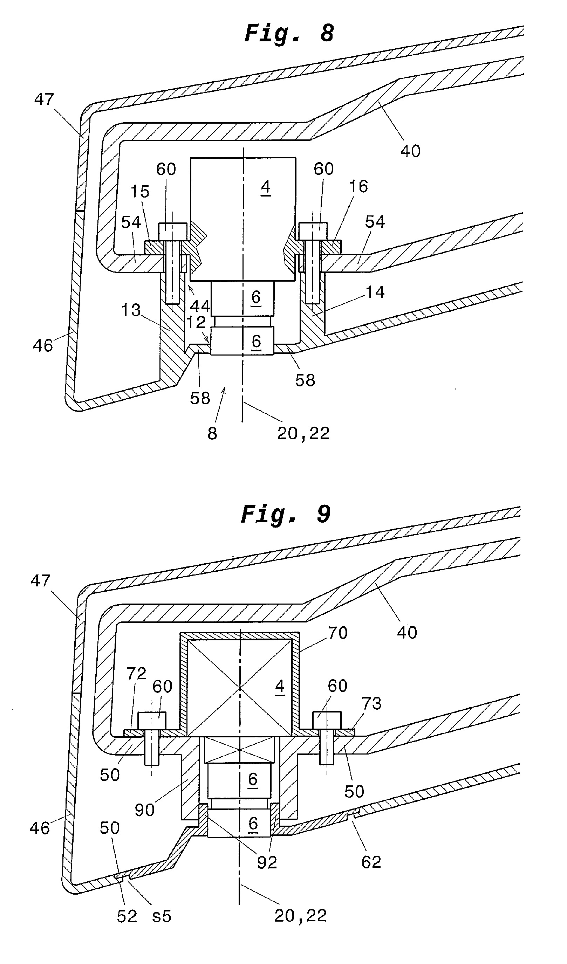

Fig. 8 zeigt eine achte Ausführungsordnung der Erfindung, die sich von der Ausführungsform nach Fig. 4 dadurch unterscheidet, dass Sensorhalter 8 und erste Haltearmabdeckung 46 einstückig ausgebildet sind. Durch diese Ausgestaltung erübrigt sich der in den Ausführungsformen nach den Figuren 4 bis 6 vorgesehenen Befestigungskragen 46. Die Befestigungsschrauben 60 durchsetzen die Schraublöcher der Befestigungslaschen 15 und 16, die Schraublöcher 18 in dem ebenen Randabschnitt 54 und greifen dann in die beiden Schraubaufnahmen von 13 und 14 ein.

Fig. 9 zeigt eine neunte Ausführungsform der Erfindung, die sich von den vorhergehenden Ausführungsformen vor allem dadurch unterscheidet, dass der Sensorhalter 8 keine Schraubaufnahmen aufweist. Der ebenen Randabschnitt 54 in dem Haltearm 40 ist mit einem zylindrischen Aufsatz 90 versehen, der sich nach außen erstreckt. Ebenso erstreckt sich von dem Randabschnitt 58 des Sensorhalters 8 ein zylindrischer Aufsatz 92 in Richtung Sensorhauptkörper 4. Der Außendurchmesser des zylindrischen Aufsatzes 92 entspricht dem Innendurchmesser des zylindrischen Aufsatzes 90. Das obere Ende des zylindrischen Aufsatzes 92 greift in das untere Ende des zylindrischen Aufsatzes 90 ein und der zylindrischen Aufsatz 92 wird zwischen dem Sensorkopf 6 und dem zylindrischen Aufsatz 90 eingeklemmt. Die dem Sensorkopf 6 zugewandte Unterkannte des Sensorhauptkörpers 4 sitzt, wie bei der Ausführungsform nach Fig. 5 auf der Innenseite des ebenen Randabschnitts 54 auf. Die von dem Sensorkopf 6 abgewandte Seite des Sensorhauptkörpers 4 wird wie bei der Ausführungsform nach Fig. 5 durch eine obere Haltekappe 70 abgedeckt, von der sich die beiden Befestigungslaschen 72 und 73 seitlich wegerstrecken. Die Schraublöcher 18 in dem ebenen Randabschnitt 54 sind mit einem Gewinde versehen, so dass die Befestigungsschrauben 60 die Schraublöcher 18 in den Befestigungslaschen 72 und 73 durchsetzen und in den Schraublöchern mit Gewinde im ebenen Randabschnitt 54 fixiert sind.

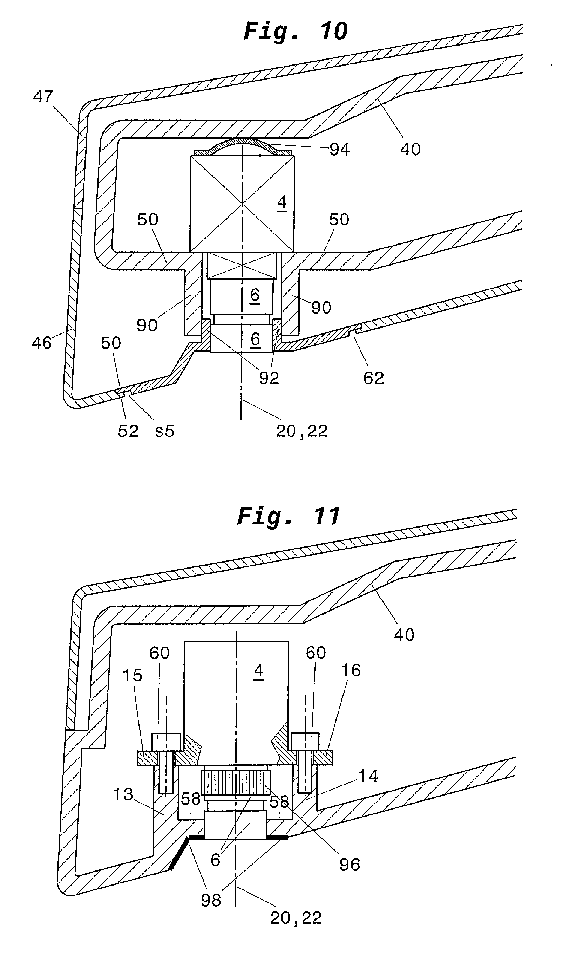

Fig. 10 zeigt eine zehnte Ausführungsform von der Erfindung, dich sich von der Ausführungsform nach Fig. 9 dadurch unterscheidet, dass der Sensorhauptkörper 4 und damit der Sensor 2 im Inneren des Haltearms 40 eingeklemmt ist. Hierzu sitzt der Sensorhauptkörper 4 mit der dem Sensorkopf 6 zugewandten Unterkante wieder auf dem ebenen Randabschnitt 54 auf und auf der Oberseite des Sensorhauptkörpers 4 bzw. auf der von dem Sensorkopf 6 abgewandten Seite des Sensorhauptkörpers ist ein Federelement 94 vorgesehen, das gegen die Innenseite des Haltearms 40 drückt und den Sensorhauptkörper und damit den Sensor 2 in dem Haltearm 40 fixiert

Fig. 11 zeigt eine elfte Ausführungsform von der Erfindung, die sich von dem vorhergehenden Ausführungsformen dadurch unterscheidet, dass der Haltearm 40 selbst als Sensorhalter 8 ausgebildet ist bzw. das der Sensorhalter 8 integraler Bestandteil des Haltearms 40 ist. Der Haltearm 40 ist zumindest in dem Bereich in dem der Sensor 2 angeordnet ist als Hohlprofil ausgebildet und weist die Sensorkopföffnung 12 auf. Der Sensorkopf 6 ist in die Sensorkopföffnung 12 mit minimalem Spaltmaß s3 eingepasst. Von dem Sensorhauptkörper 4 erstrecken sich links und rechts Befestigungslaschen 13 und 14 weg. Seitlich von der Sensorkopföffnung 12 erstrecken sich die linke und rechte Schraubenaufnahme 13 und 14 in Richtung Sensorhauptkörper 4 nach innen weg. Befestigungsschrauben 60 durchsetzen die Schraublöcher 18 in den beiden Befestigungslaschen 13 und 14 und greifen in die beiden Schraubaufnahmen 13 und 14 ein und fixieren damit den Sensor 2 im Haltearm 40.

Der im Inneren des Haltearms 40 liegende Teil des Sensorkopfs 6 ist mit einem Heizelement 96 ringförmig umschlossen. Durch dieses Heizelement 96 wird verhindert, dass sich Kondensat auf der von außen zugänglichen Seite des Sensors 2 niederschlägt. Einzelheiten zu diesem Heizelement sind aus der deutschen Patentanmeldung DE 02014202664.4 zu ersehen. Diesbezüglich wird hier vollinhaltlich auf die DE 02014202664.4 Bezug genommen. Dieses Heizelement 96 kann natürlich auch bei allen vorstehend beschriebenen Ausführungsformen eingesetzt werden.

Zusätzlich ist die Außenseite des Haltearms 40 im Bereich des Sensorhalters 8 matt ausgeführt bzw. mit einer matten Beschichtung 98 versehen, um Reflexionen in dem Sensor zu verhindern. Dies ist insbesondere dann wichtig, wenn es sich bei dem Sensor 2 um eine Kamera und bei dem Sensorkopf 6 um das Objektiv einer Kamera handelt. Die Beschichtung 98 kann natürlich auch bei allen anderen vorstehenden beschriebenen Ausführungsformen vorgesehen werden.

Sofern in den vorstehend beschriebenen Ausführungsformen Schraubenaufnahmen vorgesehen sind, ist immer von zwei Schraubenaufnahmen die Rede. Es können natürlich auch nur eine oder mehr als zwei Schraubenaufnahmen vorgesehen werden.

Bei den vorstehend beschriebenen Ausführungsformen ist der Sensorkopf 6 passgenau in die Sensorkopföffnung 12 im Sensorhalter 8 eingefügt. Der Sensorkopf 6 kann auch mittels Klemm- oder Presssitz in die Sensorkopföffnung 12 eingefügt sein.

### Bezugszeichenliste

- s1, s2, s3, s4, s5: Spaltmaß
- t: Fertigungstoleranz, Abweichung zwischen 22 und 20

- 2: Sensor
- 4: Sensorhauptkörper
- 6: Sensorkopf
- 8: Sensorhalter

- 10: Sensorkopfaufnahme
- 12: Sensorkopföffnung
- 13: linke Schraubenaufnahme
- 14: rechte Schraubenaufnahme
- 15: linke Befestigungslasche
- 16: rechte Befestigungslasche
- 18: Schraublöcher
- 20: Sensorachse
- 22: Hauptkörpermittelachse
- 24: Sensorhalteachse
- 26: Blende
- 28: Blendenöffnung
- 30: Sensorkopfkragen
- 32: Ringwulst
- 34: Ringnut

- 40: Haltearm
- 42: vom Fahrzeug abgewandtes Ende von 40
- 44: Sensoröffnung in 40
- 46: erste Haltearmabdeckung
- 47: zweite Haltearmabdeckung
- 48: Sensorhalteröffnung in 46
- 50: ringförmig umlaufender, stufenförmiger Kragen an 8
- 52: ringförmige Stufe in 46
- 54: ebener Randabschnitt um 44
- 56: ringförmiger Befestigungskragen an 46
- 58: ebener Randabschnitt um 12
- 60: Befestigungsschrauben
- 62: ringförmiger Spalt um 8

- 70: obere Haltekappe oder oberer Haltebügel
- 72: linke Befestigungslasche
- 73: rechte Befestigungslasche
- 80: untere Haltekappe oder unterer Haltebügel
- 82: linke Befestigungslasche
- 83: rechte Befestigungslasche

- 90: zylindrischer Aufsatz auf 50
- 92: zylindrischer Aufsatz auf 58
- 94: Federelement

- 96: Heizelement
- 98: Beschichtung

## Patentansprüche

1. Sensoranordnung, insbesondere für außen an einem Kraftfahrzeug anzubringende Sensoren zur Überwachung des Fahrzeugumfeldes, mit einem Sensor (2), der einen Sensorhauptkörper (4) und einen Sensorkopf (6) umfasst,
wobei der Sensorkopf (6) eine Sensorachse (20) aufweist nach der die Sensoranordnung auszurichten ist,
einem Sensorhalter (8), der eine Sensorkopfaufnahme (10) mit einer Sensorkopföffnung (12) aufweist in die der Sensorkopf (6) hineinragt,
wobei die Sensorkopfaufnahme (10) eine Sensorhalteachse (24) festlegt, und einem Befestigungsmittel (13, 14,18, 60, 94) zur Befestigung des Sensors (2) im Sensorträger (8), **dadurch gekennzeichnet,**
**dass** die Sensorkopfaufnahme (10) so ausgebildet ist, dass im montierten Zustand des Sensors (2) im Sensorhalter (8) die Sensorhalteachse (24) und die Sensorachse (20) fluchten.

2. Sensoranordnung nach Anspruch 1, **dadurch gekennzeichnet, dass** der Sensorkopf (6) in der Sensorkopföffnung (12) fixiert ist.

3. Sensoranordnung nach Anspruch 2, **dadurch gekennzeichnet,**
**dass** der Sensorkopf (6) einen Sensorkopfkragen (30) aufweist, der symmetrisch zur Sensorachse (20) angeordnet ist und der auf dem Sensorhalter (8) aufliegt.

4. Sensoranordnung nach Anspruch 1 oder 2, **dadurch gekennzeichnet,**
**dass** der Sensorkopf (6) über die Sensorkopföffnung (12) hinausragt,
**dass** die Sensorkopföffnung (12) von einer Blende (26) mit einer Blendenöffnung (28) umgeben ist,
**dass** der Sensorkopf (6) in die Blendenöffnung (28) hineinragt, und
**dass** die Blendenöffnung (28) zu dem Sensorkopf (6) ein vordefiniertes Spaltmaß (s4) festlegt.

5. Sensoranordnung nach einem der vorhergehenden Ansprüche, **dadurch gekennzeichnet, dass** der Sensorkopf (6) Zentriermittel (30, 32) und die Sensoraufnahme (10) korrespondierende Zentriermittel (34) umfassen.

6. Sensoranordnung nach einem der vorhergehenden Ansprüche, **dadurch gekennzeichnet,**
**dass** der Sensorhauptkörper (4) eine Hauptkörpermittelachse (22) aufweist, und dass die Befestigungsmittel (18, 60) Abweichungen zwischen Hauptkörpermittelachse (24) und Sensorachse (20) ausgleichen.

7. Sensoranordnung nach einem der vorhergehenden Ansprüche, **gekennzeichnet durch** einen Haltearm (40) in oder an dem der Sensor (2) und der Sensorhalter (8) angeordnet sind.

8. Sensoranordnung nach Anspruch 7, **dadurch gekennzeichnet, dass** der Sensorhalter (8) einstückig mit dem Haltearm (40) ausgebildet ist.

9. Sensoranordnung nach Anspruch 7, **dadurch gekennzeichnet, dass** eine Haltearmabdeckung (46) vorgesehen ist und dass der Sensorträger (8) einstückig mit der Haltearmabdeckung (46) ausgebildet ist.

10. Sensoranordnung nach Anspruch 7, **dadurch gekennzeichnet, dass** eine Haltearmabdeckung (46) vorgesehen ist und dass die Haltearmabdeckung (46) eine Sensorhalteröffnung (48) aufweist in die der Sensorhalter (8) mittels einer Steckrandverbindung (50, 52) zwischen Sensorträger (8) und Haltearmabdeckung (46) eingesetzt ist.

11. Sensoranordnung nach Anspruch 10, **dadurch gekennzeichnet, dass** der von außen sichtbare Fügespalt (62) der Überlappverbindung (50, 52) zwischen Sensorträger (8) und Haltearmabdeckung (46) ein vordefiniertes Spaltmaß (s5) aufweist.

12. Sensoranordnung nach einem der vorhergehenden Ansprüche 7 bis 11, **dadurch gekennzeichnet, dass** die Verbindung zwischen Sensor (2), Sensorhalter (8), Haltearm (40) und Haltearmabdeckung (46) mittels einer Klemmschluss-, einer Klebe- und/oder einer Schraubverbindung erfolgt.

13. Sensoranordnung nach einem der vorhergehenden Ansprüche, **dadurch gekennzeichnet, dass** die Verbindung zwischen Sensor (2), Sensorhalter (8), Haltearm (40) und/oder Haltearmabdeckung (46) wärmeleitend ist.

14. Sensoranordnung nach einem der vorhergehenden Ansprüche, **dadurch gekennzeichnet, dass** der Sensor (2) mit einem Heizmittel (96) versehen ist, das insbesondere am Sensorkopf (6) angeordnet ist.

15. Sensoranordnung nach einem der vorhergehenden Ansprüche, **dadurch gekennzeichnet, dass** der Sensor (2) eine Kamera und der Sensorkopf (6) ein Kameraobjektiv ist.

16. Sensoranordnung nach Anspruch 15, **dadurch gekennzeichnet, dass** die Kamera eine Wärmebildkamera ist.

17. Sensoranordnung nach einem der vorhergehenden Ansprüche 1 bis 14, **dadurch gekennzeichnet, dass** der Sensor (2) einen Radarsensor, einen Infrarotsensor und/oder einen Ultraschallsensor umfasst.

18. Sensoranordnung nach einem der vorhergehenden Ansprüche, **dadurch gekennzeichnet, dass** die Außenseite des Sensorhalters (8) um die Sensorkopföffnung (12) matt ausgeführt oder mit einer matten Beschichtung (98) versehen ist.

19. Sensoranordnung nach einem der vorhergehenden Ansprüche, **dadurch gekennzeichnet, dass** sie in eine Blinkerleuchte integriert ist.
